## Europäisches Patentamt

## European Patent Office

## Office européen des brevets

(11) Veröffentlichungsnummer: **0 073 538**
**B1**

(12) **EUROPÄISCHE PATENTSCHRIFT**

(45) Veröffentlichungstag der Patentschrift:
**08.05.85**

(21) Anmeldenummer: **82201012.0**

(22) Anmeldetag: **12.08.82**

(51) Int. Cl.⁴: **F 27 D 11/08,** F 27 B 3/06,
C 21 C 5/52

(54) **Schräganordnung der Aufladeflächen von Ofenkessel und Ofendeckel für Lichtbogenöfen.**

(30) Priorität: **02.09.81 CH 5642/81**

(43) Veröffentlichungstag der Anmeldung:
**09.03.83 Patentblatt 83/10**

(45) Bekanntmachung des Hinweises auf die Patenterteilung:
**08.05.85 Patentblatt 85/19**

(84) Benannte Vertragsstaaten:
**AT CH DE FR GB IT LI SE**

(56) Entgegenhaltungen:
**DE - A - 2 253 616**
**DE - B - 1 084 445**
**DE - C - 702 690**
**FR - A - 1 058 716**
**GB - A - 437 333**
**US - A - 1 392 965**

(73) Patentinhaber: **BBC Aktiengesellschaft Brown, Boveri & Cie., Haselstrasse, CH-5401 Baden (CH)**

(72) Erfinder: **Bühler, Karl, Oberdorfstrasse 28, CH-5415 Nussbaumen (CH)**

BUNDESDRUCKEREI BERLIN

**Beschreibung**

Die Erfindung bezieht sich auf einen Lichtbogenofen mit einem Ofenkessel, einem Ofendeckel und einer Deckeltrag- und Schwenkvorrichtung, wobei der Ofenkessel und Ofendeckel relativ zueinander und annähernd eine Ofenkesselbreite verfahrbar sind.

Um einen Lichtbogenofen mit festem Einsatz gut beschicken zu können, muß dessen Kessel freigelegt werden. Eine gebräuchliche Art hierfür ist, den Ofendeckel durch eine Deckelhebe- und Schwenkvorrichtung, den sogenannten Oberofen, zuerst vertikal nach oben vom Ofenkessel abzuheben und ihn dann horizontal zur Seite wegzuschwenken. Eine weitere Art, die neuerdings in der Stahlwerkspraxis immer mehr Eingang findet, ist, nach vorangegangenem Abheben des Deckels durch eine Deckelhebevorrichtung, den Ofenkessel in Kipprichtung oder quer zur Kipprichtung aus dem Ofendeckelbereich zu verschieben.

In der russischen Schrift mit dem Titel »Berechnung und Konstruktion elektrischer Öfen« von S. Kacewitsch; Technisch-Wissenschaftlicher Verlag Moskau, Leningrad 1959 ist auf Seite 422 ein Ofen beschrieben, dessen Kessel in Kipprichtung verfahrbar ist.

Bei diesem technischen Konzept, wie auch bei allen anderen, wo der Deckel angehoben wird, ist eine Deckelhebevorrichtung mit den dazugehörigen Anlagenteilen, wie z. B. Ventilsteuerungen, mechanischen Kraftübertragungseinrichtungen, Verriegelungssystemen etc. erforderlich. Besonders bei Öfen mit mittlerem bis großem Fassungsvermögen müssen die Deckelhebevorrichtungen sehr stark dimensioniert sein, um die relativ schweren Deckel anheben zu können. Und entsprechend Dimensionierung und konstruktivem Aufwand ist der Anteil einer Deckelhebevorrichtung an den Investitionskosten für die Ofenanlage hoch.

Hier will die Erfindung Abhilfe schaffen.

Die Erfindung, wie sie in den Anspüchen gekennzeichnet ist, löst die Aufgabe, einen Lichtbogenofen zu schaffen, bei dem Ofenkessel und -deckel relativ zueinander um annähernd eine Ofenkesselbreite auf einfache und wirtschaftliche Weise verfahrbar sind, dadurch, daß die Trennflächen von Ofenkessel und -deckel gegenüber der Horizontalen geneigt sind und die Bewegungsrichtung bei bewegtem Ofenkessel in Richtung der Winkelöffnung und bei bewegtem Ofendeckel in umgekehrter Richtung verläuft.

Der durch die Erfindung erreichte Vorteil ist im wesentlichen darin zu sehen, daß die aufwendige Deckelhebevorrichtung entfällt und daß lediglich eine Vorrichtung zum Tragen des Deckels erforderlich ist, deren Aufbau einfach und deren Dimensionierung, da keine Hubarbeit zu leisten ist, vergleichsweise gering ist.

Diese Deckelhebevorrichtung ist mit einer Schwenkvorrichtung kombiniert für den Fall, daß der Ofenkessel zum Beschicken des Ofens stationär in der Arbeitslage verbleibt und der Deckel aus dem Kesselbereich geschwenkt wird.

Entsprechend Anspruch 2 sind Mittel am Ofenkessel und Ofendeckel vorgesehen, um auf einem Wegstück beim Öffnen von Ofenkessel und Ofendeckel das Gewicht des Ofendeckels zuerst teilweise auf den Oberofen und nach dem Öffnen vollständig auf den Oberofen zu übertragen, und vor dem Schließen des Ofenkessels mit dem Ofendeckel das Gewicht des Ofendeckels zuerst teilweise auf den Ofenkessel und nach Schließen des Ofenkessels mit Ofendeckel das Gewicht des Ofendeckels vollständig auf den Ofenkessel zu übertragen. Der Vorteil dieser Weiterbildung der Erfindung ist darin zu sehen, daß das Gewicht des Ofendeckels beim Öffnen von Ofenkessel und Ofendeckel sukzessive vom Ofenkessel auf die Deckeltrag- und Schwenkvorrichtung übertragen wird. Ebenso wird beim Schließen von Ofenkessel und Ofendeckel das Gewicht des Ofendeckels sukzessive von der Deckeltrag- und Schwenkvorrichtung auf den Ofenkessel übertragen. Hierdurch werden Zerstörungen an Ofenkessel, -deckel und Deckeltrag- und Schwenkvorrichtung vermieden.

Gemäß Anspruch 3 stützt sich nach dem Schließen von Ofenkessel und Ofendeckel der Ofendeckel vollständig auf den Abstützmitteln, unter Beabstandung der Trennflächen von Ofenkessel und -deckel, ab.

Durch diese Maßnahme wird ein definiertes Öffnen bzw. Schließen von Ofenkessel und -deckel erreicht, unter weitgehender Ausschließung der Überwindung von Reibungskräften, die auftreten würden, wenn die Trennflächen von Ofenkessel und -deckel sich unmittelbar berühren würden.

Nach Anspruch 4 bestehen die Abstützmittel aus wenigstens zwei Rollbahnen und darauf abrollenden Tragrollen.

Nach Anspruch 5 verlaufen die Rollbahnen im wesentlichen parallel zur Bewegungsrichtung des Ofenkessels bzw. des Ofendeckels.

Gemäß Anspruch 6 laufen die Tragrollen im wesentlichen parallel zur Bewegungsrichtung des Ofenkessels bzw. Ofendeckels auf den Rollbahnen ab.

Die vorteilhafte Wirkung gemäß der Weiterbildungen nach den Ansprüchen 4, 5 und 6 besteht darin, daß die horizontalen Verschiebekräfte für das Öffnen bzw. Schließen von Ofenkessel und -deckel reduziert werden können.

Entsprechend Anspruch 7 verlaufen die Rollbahnen parallel zu den Trennflächen von Ofenkessel und -deckel.

Hierdurch wird die vorteilhafte Wirkung gemäß der Ansprüche 4, 5 und 6 noch verstärkt. Der Neigungswinkel der Trennfläche von Ofenkessel und -deckel ist jedoch so bemessen, daß ein selbständiges Verschieben des Ofendeckels ohne horizontale Krafteinwirkung nicht möglich ist.

Nach Anspruch 8 sind die Rollbahnen am Dekkelring des Ofendeckels und die Tragrollen am Ofenkessel befestigt. Der Vorteil liegt darin, daß Fremdkörper, beispielsweise Spritzeisen und/oder Schlackenpartikel sich nicht auf der Rollbahn festsetzen können.

Gemäß Anspruch 9 sind die Tragrollen am Deckelring des Ofendeckels und die Rollbahnen am Ofenkessel befestigt. Diese Anordnung weist den Vorteil auf, daß die Tragrollen vor thermischem Einfluß geschützt sind, da der Deckelring des Ofendeckels gekühlt ist.

Entsprechend Anspruch 10 sind am Ofenkessel und am Ofendeckel eine Führungs- und eine Verriegelungsvorrichtung angeordnet.

Nach Anspruch 11 umfaßt die Führungsvorrichtung Führungslaschen des Ofenkessels und Führungslaschen des Ofendeckels.

Gemäß Anspruch 12 umfaßt die Verriegelungsvorrichtung Bohrungen in den Führungslaschen des Ofenkessels und des Ofendeckels sowie wenigstens einen Verriegelungsbolzen.

Durch die Führungs- und Verriegelungsvorrichtungen gemäß Ansprüchen 10 bis 12 ist gewährleistet, daß sich Ofenkessel und -deckel wieder in genau zentrierter Lage nach jedem beendeten Schließvorgang befinden.

Die Erfindung wird nachstehend anhand von in der Zeichnung dargestellten Ausführungsbeispielen erläutert. In der Zeichnung zeigt

Fig. 1 eine schematische Darstellung der Vorderansicht eines Lichtbogenofens gemäß einer ersten Variante einer beispielsweisen Ausführungsform, wobei der Ofenkessel in horizontaler Richtung aus dem Deckelbereich verschiebbar und der Ofendeckel stationär angeordnet sind,

Fig. 2 eine schematische Draufsicht gemäß Fig. 1,

Fig. 3 eine schematische Darstellung der Vorderansicht eines Lichtbogenofens gemäß einer zweiten Variante einer beispielsweisen Ausführungsform, wobei der Ofendeckel in horizontaler Richtung aus dem Kesselbereich ausschwenkbar und der Ofenkessel stationär angeordnet sind,

Fig. 4 eine schematische Seitenansicht eines Lichtbogenofens gemäß Fig. 3,

Fig. 5 eine vergrößerte teilweise Vorderansicht eines Ofenkessels und eines Ofendeckels gemäß Fig. 1 oder 3,

Fig. 6 einen horizontalen Schnitt gemäß Fig. 5.

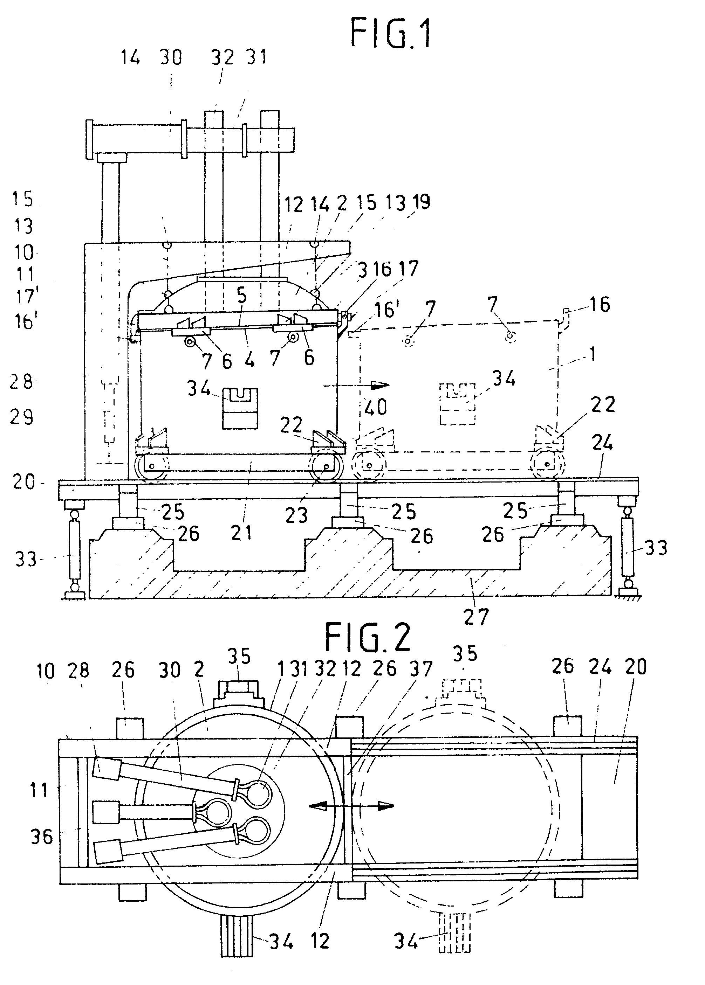

In Fig. 1 ist ein Ofenkessel 1 in zwei Lagen gezeichnet. Die linke voll gezeichnete Lage ist die Arbeitslage für den Schmelzvorgang. Die rechts gestrichelt gezeichnete Lage ist die Lage des Ofenkessels 1 für den Beschickungsvorgang. In Fig. 1 ist die Neigung der Trennflächen 4, 5 des Ofenkessels 1 und des Ofendeckels 2 gegenüber der Horizontalen gut erkennbar. Die Bewegungsrichtung des Ofenkessels 1 erfolgt in Richtung des sich gegenüber der Horizontalen öffnenden Winkels gemäß Pfeilrichtung 40, während der Ofendeckel 2 stationär bleibt.

Am Deckelring 3 des Ofendeckels 2 sind vier Rollbahnen 6 angeordnet, von denen nur zwei sichtbar sind. Die Rollbahnen 6 stützen sich auf Tragrollen 7 ab, die am Ofenkessel 1 befestigt sind. Zur genauen Positionierung und Verriegelung von Ofenkessel 1 und -deckel 2 sind am Ofenkessel 1 und am Ofendeckel 2 Führungslaschen 16, 17 vorgesehen. Der Deckel 2 wird von der Deckeltragvorrichtung 10 durch Tragseile 15 getragen, die durch Ösen 13 am Deckelring 3 mit dem Deckel 2 und durch Ösen 14 am Deckeltragarm 12 mit der Deckeltragvorrichtung 10 verbunden sind. Durch eine nicht dargestellte Justiereinrichtung werden die Tragseile 15 vor dem Verschieben des Ofenkessels 1 gespannt und ein Schwingen des Ofendeckels 2 und/oder eine ruckartige Übertragung des Deckelgewichtes auf die Deckeltragvorrichtung 10 zu vermeiden.

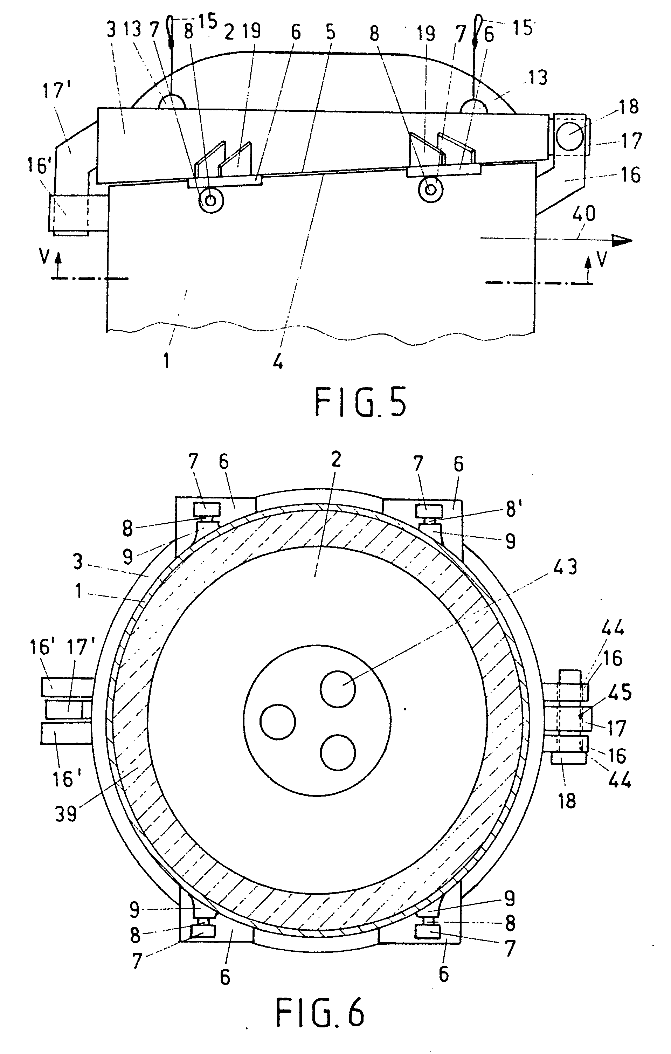

Die Funktionsweise der Bauteile beim Öffnungs- und Schließvorgang von Ofenkessel 1 und -deckel 2 wird in Fig. 5 näher beschrieben.

In Fig. 1 ruht der Ofenkessel 1 auf einer Tragkonstruktion 21, die durch Räder 23 auf Schienen 24, die auf der Plattform 20 angeordnet sind, verfahrbar ist. Zur mechanischen Verstärkung sind an der Tragkonstruktion 21 Konsolen 22 angebracht. Die Plattform 20 ist in diesem Beispiel mit drei Abwälzringen 25 abgestützt, die sich wiederum auf drei Wiegebalken 26 abwälzen können.

Die Wiegebalken 26 sind auf einem Fundament 27 angebracht. Auf der Plattform 20 ist eine Deckeltragvorrichtung 10 befestigt, die aus Deckeltragsäule 11 und Deckeltragarm 12 besteht.

In an sich bekannter Weise sind Elektroden-Stellsäulen 28 in der vertikalen Richtung mit angeordneten Stellzylindern 29 hydraulisch bewegbar verbunden.

Die Elektroden-Stellsäulen 28 tragen Elektroden-Tragarme 30, an deren äußeren Enden in Elektroden-Fassungen 31 die Elektroden 32 gehalten werden.

Hydraulikzylinder 33, die jeweils links und rechts an den Enden der Plattform 20 mit dieser verbunden sind, verursachen die Kippbewegungen des Lichtbogenofens zum Ausgießen der Schmelze aus der Gießschnauze 34 und zum Abschlacken der Schmelze.

Die meisten Teile, die in Fig. 1 beschrieben werden, sind ebenfalls in Fig. 2 zu sehen, die eine schematische Draufsicht gemäß Fig. 1 darstellt.

In Fig. 2 sowie in den weiteren Figuren sind dieselben Funktionsteile mit den gleichen Bezugsziffern wie in Fig. 1 bezeichnet.

In Fig. 2 sind die Verbindungstraversen 36, 37 des Deckeltragarms 12 und die Schlackentür 35 ersichtlich.

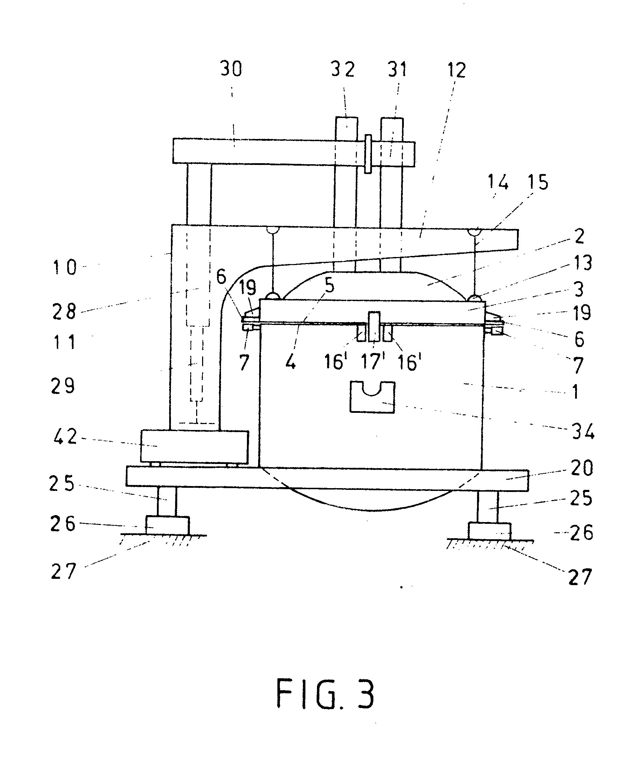

Fig. 3 zeigt eine schematische Darstellung der Vorderansicht eines Lichtbogenofens gemäß einer zweiten Variante einer beispielsweisen Ausführungsform, wobei der Ofendeckel 2 in horizontaler Richtung ausschwenkbar, und der Ofenkessel stationär angeordnet sind. Die Deckeltragvorrichtung 10 ist mit einer Drehkonsole 42 verbunden, die auf der Plattform 20 drehbar gelagert, angeordnet ist, womit der Ofendeckel 2 gleichzeitig getragen und ausgeschwenkt werden kann.

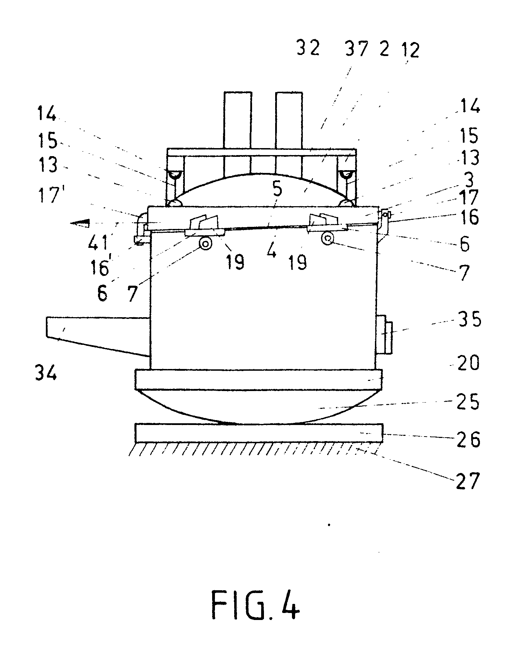

Am Deckelring 3 des Ofendeckels 2 sind ebenfalls Rollbahnen 6 befestigt, auf denen Tragrollen 7 abrollen können. Die Tragrollen 7 sind am Ofenkessel 1 angebracht. Zur mechanischen Verstärkung der Rollbahnen 6 sind Verstärkungsrippen 19 vorgesehen. Die Neigung der Trennflächen 4, 5 von Ofenkessel 1 und Ofendeckel 2 sind auf Fig. 3 nicht, jedoch auf Fig. 4 ersichtlich, die eine schematische Seitenansicht eines Lichtbogenofens gemäß Fig. 3 zeigt.

In Fig. 4 ist die Neigung der Trennflächen 4, 5 des Ofenkessels 1 und des Ofenkessels 2 gegenüber der Horizontalen gut erkennbar. Die Bewegungsrichtung des Ofendeckels 2 erfolgt in Richtung des sich gegenüber der Horizontalen schließenden Winkels, gemäß Pfeilrichtung 41, während der Ofenkessel 1 stationär auf der Plattform 20 angeordnet ist. Die Deckeltrag- und Schwenkvorrichtung (10, 42) übernimmt bei Öffnen von Ofenkessel 1 und Ofendeckel 2 das Gewicht des Ofendeckels 2 vollständig und der Ofendeckel 2 wird frei hängend an den Tragseilen 15 aus dem Kesselbereich ausgeschwenkt. Vor dem Schließen des Ofenkessels 1 mit dem Ofendeckel 2 wird das Gewicht des Ofendeckels 2 zumindest teilweise und nach dem Schließen vollständig auf den Ofenkessel 1 übertragen.

Fig. 5 zeigt eine vergrößerte teilweise Vorderansicht eines Ofenkessels 1 und eines Ofendeckels 2 gemäß Fig. 1 oder Fig. 3.

Alle nicht zum unmittelbaren Verständnis der Erfindung erforderlichen Funktionsteile sind weggelassen worden.

Der Ofendeckel 2 liegt mit seinem vollen Gewicht lediglich an vier Berührungspunkten auf dem Ofenkessel 1 auf, an denen Rollbahnen 6 und darauf über ein Wegstück abrollende Tragrollen 7 angeordnet sind. in Fig. 5 sind lediglich zwei Rollbahnen 6 und den dazugehörigen Tragrollen 7 ersichtlich. Die gering beabstandeten Trennflächen 4, 5 von Ofenkessel 1 und -deckel 2 sind gut erkennbar.

Die Rollbahnen 6 sind mit Verstärkungsrippen 19 am Deckelring des Ofendeckels 2 befestigt.

Die Tragrollen 7 sind durch Rollenschäfte 8, in denen sie drehbar gelagert sind, mit dem Ofenkessel 1 verbunden.

In Fig. 5 ist die Arbeitslage des Lichtbogenofens dargestellt. Dabei greifen die Führungslaschen 16, 16' des Ofenkessels 1 und die Führungslaschen 17, 17' des Ofendeckels 2 ineinander. Ofenkessel 1 und -deckel 2 sind durch eine Verriegelungsvorrichtung 18, 44, 45 verriegelt, die durch Bohrungen 44, 45 in den Führungslaschen 16, 17 des Ofenkessels 1 und des Ofendeckels 2 sowie durch den Verriegelungsbolzen 18 gebildet wird.

Am Deckelring 3 des Ofendeckels 2 sind an Ösen 13 Tragseile 15 befestigt, von denen in Fig. 5 nur ein Teil zu sehen ist. Der Neigungswinkel der Trennflächen 4, 5 von Ofenkessel 1 und -deckel 2 gegenüber der Horizontalen ist derart bemessen, daß die vertikale Gewichtskomponente des Ofendeckels 2 größer ist als die horizontale, und daß dadurch der Ofendeckel 2 ohne horizontale Krafteinwirkung nicht bewegt werden kann.

Fig. 6 zeigt einen horizontalen Schnitt gemäß Fig. 5. An der unteren Seite des Deckelringes 3, die den Ofenkessel 1 nach außen überragt, sind die Rollbahnen 6 angeordnet. In vorspringenden Augen 9 sind am Ofenkessel 1 die Rollenschäfte 8 befestigt, die die drehbar gelagerten Tragrollen 7 mit dem Ofenkessel 1 verbinden.

Der Öffnungs- bzw. Schließvorgang von Ofenkessel 1 bzw. Ofendeckel 2 wird nachstehend anhand der Fig. 5 und 6 beschrieben.

Es wird dabei Variante 1 gemäß Fig. 1 zugrunde gelegt. Dabei wird der Ofenkessel 1 horizontal aus dem Deckelbereich verschoben, während der Ofendeckel 2 stationär angeordnet ist. Mit der in Fig. 5 dargestellten erfindungsgemäßen Anordnung kann selbstverständlich auch die Variante 2 zur Anwendung kommen, bei der der Ofendeckel 2 horizontal aus dem Kesselbereich geschwenkt wird und der Ofenkessel 1 stationär angeordnet ist.

Der Öffnungsvorgang von Ofenkessel 1 und Ofendeckel 2: Nach dem Lösen des Arretierungsbolzen 18 aus den Bohrungen 44, 45 der Führungslaschen 16, 17 wird am Ofenkessel 1 eine horizontale Kraft, gemäß Pfeilrichtung 40, beispielsweise durch eine in Fig. 5 nicht dargestellte Seilwinde, aufgebracht. Der Ofenkessel 1 bewegt sich nunmehr in Richtung des sich öffnenden Winkels, der aus der Neigung der Trennflächen 4, 5 des Ofenkessels 1 bzw. -deckels 2 gegenüber der Horizontalen gebildet wird. Der Neigungswinkel beträgt gegenüber der Horizontalen 5 bis 15 Grad. Da die Rollbahnen 6 parallel zu den Trennflächen 4, 5 verlaufen, d. h. ebenfalls geneigt sind, die Tragrollen 7 jedoch parallel zur Horizontalen verlaufen, werden die Tragrollen 7 nur auf einem Wegstück auf den Rollbahnen 6 abrollen und diese dann, bei weiterer Bewegung des Ofenkessels 1 in die Pfeilrichtung 40, verlassen. Nach der Trennung von Tragrollen 7 und Rollbahnen 6 wird das ganze Gewicht des Ofendeckels 2 durch die Tragseile 15 auf die Deckelhaltevorrichtung 10 übertragen. Die Deckelhaltevorrichtung 10 ist in Fig. 5 nicht dargestellt. Es ist selbstverständlich, daß die Tragseile 15 vor dem Öffnungsvorgang von Ofenkessel 1 und Ofendeckel 2 gespannt sind. Die Spannung der Tragseile erfolgt durch eine in Fig. 5 nicht dargestellte Justiereinrichtung oder Seilspann-Einrichtung. Das Spannen der Tragseile 15 ist erforderlich, um beim Öffnungsvorgang von Ofenkessel 1 und -deckel 2 ein Schwingen des Ofenkessels 2 bzw. eine ruckartige Übertragung des Deckelgewichtes auf die Deckelhaltevorrichtung 10 zu vermeiden. Ein vertikales Anheben des Ofendeckels 2 duch die Deckelhaltevorrichtung 10 vor dem Öffnungsvorgang von Ofenkessel 1 und -deckel 2 wird durch die Justiereinrichtung ebenfalls vermieden. Nach der Trennung von Ofenkessel 1 und -deckel 2 wird der Ofenkessel 1 vollständig aus dem Deckelbereich bewegt und der nunmehr freiliegende Ofenkessel 1 kann neu chargiert werden, während Ofendeckel 2 an der Deckelhaltevorrichtung 10 frei schwebend verankert ist.

Der Schließvorgang von Ofenkessel 1 und Ofendeckel 2: Nach erfolgter Chargierung des Ofenkessels 1 wird der Ofenkessel 1 entgegengesetzt zur Pfeilrichtung 40, ebenfalls durch Seilwindezug, der in Fig. 5 nicht dargestellt ist, zurückbewegt. Nach Berührung der Tragrollen 7 mit den Rollbahnen 6 wird das Deckelgewicht zumindest teilweise, nach einem Wegstück vollständig, von den Tragrollen 7 übernommen und die Tragseile 15 bzw. die Deckeltragvorrichtung 10 dementsprechend sukzessive entlastet, bis nach dem Schließen von Ofenkessel 1 und -deckel 2 der Ofendeckel 2 vollständig auf dem Ofenkessel 1 ruht. Beim Schließen von Ofenkessel 1 und -deckel 2 wird die Führungslasche 17′ des Ofendeckels 2 zwischen die Führungslaschen 16′ des Ofenkessels 1 hineingeführt und der Ofenkessel 1 soweit zurückbewegt bis die Bohrungen 44 der Arretierungslaschen 16 des Ofenkessels 1 mit der Bohrung 45 der Arretierungslasche 17 des Ofendeckels 2 in Deckungsgleichheit gebracht und der Arretierungsbolzen 18 eingelegt werden kann. Nunmehr ist der Schließvorgang beendet. Der Ofenkessel 1 befindet sich wieder in Ausgangslage in genauer Zentrierung zum Ofendeckel 2 und der Schmelzprozeß kann von neuem beginnen.

**Patentansprüche**

1. Lichtbogenofen mit einem Ofenkessel (1), einem Ofendeckel (2) und einem zumindest eine Deckeltragvorrichtung umfassenden Oberofen (10, 42), wobei der Ofenkessel (1) und der Ofendeckel (2), relativ zueinander, um annähernd eine Ofenkesselbreite bewegbar sind, dadurch gekennzeichnet, daß die Trennflächen (4, 5) von Ofenkessel (1) und Ofendeckel (2) gegenüber der Horizontalen um den gleichen Winkel geneigt sind und die Bewegungsrichtung bei bewegtem Ofenkessel (1) in Richtung der Winkelöffnung, bei bewegtem Ofendeckel (2) in umgekehrter Richtung verläuft.

2. Lichtbogenofen nach Anspruch 1, gekennzeichnet durch Abstützmittel (6, 7) am Ofenkessel (1) und Ofendeckel (2), um auf einem Wegstück beim Öffnen von Ofenkessel (1) und Ofendeckel (2) das Gewicht des Ofendeckels (2) zumindest teilweise auf den Oberofen (10, 42) und nach dem Öffnen vollständig auf diesen zu übertragen, und vor dem Schließen des Ofenkessels (1) mit dem Ofendeckel (2) das Gewicht des Ofendeckels (2) zumindest teilweise auf den Ofenkessel (1) und nach dem Schließen des Ofenkessels (1) mit dem Ofendeckel (2) das Gewicht des Ofendeckels (2) vollständig auf den Ofenkessel (1) zu übertragen.

3. Lichtbogenofen nach Anspruch 1 und 2, dadurch gekennzeichnet, daß nach dem Schließen von Ofenkessel (1) und Ofendeckel (2) sich der Ofendeckel (2) vollständig auf den Abstützmitteln, unter Beabstandung der Trennfläche (4) des Ofenkessels (1) und der Trennfläche (5) des Ofendeckels (2), abstützt.

4. Lichtbogenofen nach Ansprüche 2 und 3, dadurch gekennzeichnet, daß die Mittel aus wenigstens zwei Rollbahnen (6) und darauf abrollenden Tragrollen (7) bestehen.

5. Lichtbogenofen nach einem der Ansprüche 2 bis 4, dadurch gekennzeichnet, daß die Rollbahnen (6) im wesentlichen parallel zur Bewegungsrichtung des Ofenkessels (1) bzw. Ofendeckels (2) verlaufen.

6. Lichtbogenofen nach Ansprüche 4 und 5, dadurch gekennzeichnet, daß die Tragrollen (7) im wesentlichen parallel zur Bewegungsrichtung des Ofenkessels (1) bzw. Ofendeckels (2) auf den Rollbahnen (6) ablaufen.

7. Lichtbogenofen nach einem der Ansprüche 4 bis 6, dadurch gekennzeichnet, daß die Rollbahnen (6) parallel zu den Trennflächen (4, 5) von Ofenkessel (1) und Ofendeckel (2) verlaufen.

8. Lichtbogenofen nach einem der Ansprüche 4 bis 7, dadurch gekennzeichnet, daß die Rollbahnen (6) am Deckelring (3) des Ofendeckels (2) und die Tragrollen (7) am Ofenkessel (1) befestigt sind.

9. Lichtbogenofen nach einem der Ansprüche 4 bis 8, dadurch gekennzeichnet, daß die Tragrollen (7) am Deckelring (3) des Ofendeckels (2) und die Rollbahnen (6) am Ofenkessel (1) befestigt sind.

10. Lichtbogenofen nach Anspruch 1, dadurch gekennzeichnet, daß am Ofenkessel (1) und Ofendeckel (2) eine Führungsvorrichtung (16, 16′; 17, 17′) und eine Verriegelungsvorrichtung (18, 44, 45) angeordnet sind.

11. Lichtbogenofen nach Anspruch 10, dadurch gekennzeichnet, daß die Führungsvorrichtung (16, 17; 16′, 17′) Führungslaschen (16, 16′) des Ofenkessels (1) und Führungslaschen (17, 17′) des Ofendeckels (2) umfaßt.

12. Lichtbogenofen nach Anspruch 10, dadurch gekennzeichnet, daß die Verriegelungsvorrichtung (18, 44, 45) Bohrungen (44, 45) in den Führungslaschen (16, 17) des Ofenkessels (1) und Ofendeckels (2) sowie wenigstens einen Verriegelungsbolzen (18) umfaßt.

**Claims**

1. Electric arc furnace with a furnace casing (1), a furnace roof (2) and furnace upstairs (10, 42) comprising at least one roof-carrying device, the furnace casing (1) and the furnace roof (2) being movable relative to one another by approximately one furnace casing width, characterised in that the parting surfaces (4, 5) of the furnace casing (1) and furnace roof (2) are inclined to the horizontal by the same angle and, if the furnace casing (1) is moved, the movement is in the direction of the opening of the angle and, if the furnace roof (2) is moved, the movement is in the opposite direction.

2. Arc furnace according to Claim 1, characterised by support means (6, 7) on the furnace casing (1) and furnace roof (2) for transferring the weight of the furnace roof (2), over a length of travel during opening of the furnace casing (1) and furnace roof (2), at least partially to the furnace upstairs (10, 42) and, after opening, to transfer the weight completely to the latter and, before the furnace casing (1) is closed by the furnace roof (2), transferring the weight of the furnace roof (2) at least partially to the furnace casing (1) and, after the furnace casing (1) has been closed by the furnace roof (2), transferring the weight of the furnace roof (2) completely to the furnace casing (1).

3. Arc furnace according to Claim 1 and 2, characterised in that, after the closing of furnace casing (1) and furnace roof (2), the furnace roof (2) is fully supported by the support means, with a spacing between the parting surface (4) of the furnace casing (1) and the parting surface (5) of the furnace roof (2).

4. Arc furnace according to Claim 2 and 3, characterised in that the means consist of at least two roller tracks (6) and support rollers (7) rolling thereon.

5. Arc furnace according to one of Claims 2 to 4, characterised in that the roller tracks (6) run substantially parallel to the direction of movement of the furnace casing (1) or furnace roof (2).

6. Arc furnace according to Claims 4 and 5, characterised in that the support rollers (7) run, on the roller tracks (6), substantially parallel to the direction of movement of the furnace casing (1) or furnace roof (2).

7. Arc furnace according to one of Claims 4 to 6, characterised in that the roller tracks (6) run parallel to the parting surfaces (4, 5) of the furnace casing (1) and furnace roof (2).

8. Arc furnace according to one of Claims 4 to 7, characterised in that the roller tracks (6) are fixed to the roof ring (3) of the furnace roof (2) and the support rollers (7) are fixed to the furnace casing (1).

9. Arc furnace according to one of Claims 4 to 7, characterised in that the support rollers (7) are fixed to the roof ring (3) of the furnace roof (2) and the roller tracks (6) are fixed to the furnace casing (1).

10. Arc furnace according to Claim 1, characterised in that a guide device (16, 16'; 17, 17') and a locking device (18, 44, 45) are provided on the furnace casing (1) and furnace roof (2).

11. Arc furnace according to Claim 10, characterised in that the guide device (16, 17; 16', 17') comprises gide lugs (16, 16') on the furnace casing (1) and guide lugs (17, 17') on the furnace roof (12).

12. Arc furnace according to Claim 10, characterised in that the locking device (18, 44, 45) comprises bores (44, 45) in the guide lugs (16, 17) on the furnace casing (1) and furnace roof (2), and at least one locking bolt (18).

**Revendications**

1. Four à arc électrique, comprenant une cuve (1) de four, un couvercle (2) de four et une tête de four (10, 42) comportant au moins une installation de support du couvercle, dans lequel la cuve (1) et le couvercle (2) peuvent être déplacés l'un par rapport à l'autre d'environ une largeur de la cuve du four, caractérisé en ce que les surfaces de séparation (4, 5) de la cuve (1) et du couvercle (2) sont inclinées d'un angle égal par rappport à l'horizontale, et en ce que le mouvement s'effectue dans le sens de l'ouverture de l'angle lorsque c'est la cuve (1) qui se déplace et dans le sens opposé lorsque c'est le couvercle (2) qui se déplace.

2. Four à arc électrique suivant la revendication 1, caractérisé par des moyens d'appui (6, 7) agencés à la cuve (1) et au couvercle (2), pour transférer le poids du couvercle (2) à la tête de four (10, 42) au moins partiellement pendant une partie du trajet lors de l'ouverture du four par séparation de la cuve (1) et du couvercle (2) et ensuite entièrement après ouverture complète, et pour transférer le poids du couvercle (2) à la cuve (1) d'abord partiellement avant la fermeture de la cuve (1) avec le couvercle (2) et ensuite entièrement après la fermeture de la cuve (1) avec le couvercle (2).

3. Four à arc électrique suivant une des revendications 1 et 2, caractérisé en ce qu'après fermeture du four par réunion de la cuve (1) et du couvercle (2), le couvercle (2) repose entièrement sur les moyens d'appui, tout en laissant subsister un écartement entre la surface de séparation (4) de la cuve (1) et la surface de séparation (5) du couvercle (2).

4. Four à arc électrique suivant les revendications 2 et 3, caractérisé en ce que les dits moyens consistent en au moins deux plaques de roulement (6) et en galets porteurs (7) roulant sur ces plaques.

5. Four à arc électrique suivant l'une ou l'autre des revendications 2 à 4, caractérisé en ce que les plaques de roulement (6) s'étendend dans une direction essentiellement parallèle à la direction du mouvement de la cuve (1), respectivement du couvercle (2).

6. Four à arc électrique suivant les revendications 4 et 5, caractérisé en ce que les galets porteurs (7) roulent sur les plaques de roulement (6) dans une direction essentiellement parallèle à la direction du mouvement de la cuve (1), respectivement du couvercle (2).

7. Four à arc électrique suivant l'une ou l'autre des revendications 4 à 6, caractérisé en ce que les plaques de roulement (6) s'étendent parallèlement aux surfaces de séparation (4, 5) de la cuve (1) et du couvercle (2).

8. Four à arc électrique suivant l'une ou l'autre des revendications 4 à 7, caractérisé en ce que les plaques de roulement (6) sont fixées à la ceinture (3) du couvercle (2) et en ce que les galets porteurs (7) sont fixés à la cuve (1).

9. Four à arc électrique suivant l'une ou l'autre des revendications 4 à 7, caractérisé en ce que les galets porteurs (7) sont fixés à la ceinture (3) du couvercle (2) et en ce que les plaques de roulement (6) sont fixées à la cuve (1).

10. Four à arc électrique suivant la revendications 1, caractérisé en ce qu'un dispositif de guidage (16, 16'; 17, 17') et un dispositif de verrouillage (18, 44, 45) équipent la cuve (1) et le couvercle (2).

11. Four à arc électrique suivant la revendication 10, caractérisé en ce que le dispositif de guidage comprend des éclisses (16, 16') de guidage de la cuve (1) et des éclisses (17, 17') de guidage du couvercle (2).

12. Four à arc électrique suivant la revendication 10, caractérisé en ce que le dispositif de verrouillage (18, 44, 45) comprend des trous (44, 45) percés dans les éclisses (16, 17) de guidage de la cuve (1) et du couvercle (2), ainsi qu'au moins un boulon de verrouillage (18).

# FIG.1

# FIG.2

# FIG. 3

FIG. 4

FIG.5

FIG.6